# EUROPEAN PATENT SPECIFICATION

(11) **EP 0 420 134 B1**
(45) Date of publication and mention of the grant of the patent: **07.02.1996**
(21) Application number: 90118361.6
(22) Date of filing: 25.09.1990
(51) Int. Cl.: C08F 12/04

(54) **Process for producing styrene polymers**
Verfahren zur Herstellung von Styrolpolymeren
Procédé pour la préparation de polymères de styrène

(30) Priority: 29.09.1989 JP 256371/89
(43) Date of publication of application: 03.04.1991
(73) Proprietor: IDEMITSU KOSAN COMPANY LIMITED, Tokyo 100 (JP)
(72) Inventor: Kuramoto, Masahiko, Ichihara-shi, Chiba-ken (JP)
(74) Representative: Türk, Gille, Hrabal, Leifert

(56) References cited:
- EP-A- 0 224 097

## Description

### BACKGROUND OF THE INVENTION

### 1. Field of the Invention

The present invention relates to a process for producing styrene polymers having a high degree of syndiotactic configuration and a weight molecular weight distribution, represented by a ratio of weight average molecular weight(Mw)/number average molecular (Mn) being in the range of from 3 to 100 by a polymerization reaction using specified catalysts in a comparatively simple step.

### 2. Description of the Related Arts

Styrene polymers have heretofore been widely used as materials of various moldings. Especially, styrene polymers having a syndiotactic configuration are excellent in physical properties such as heat resistance and water resistance, so utilizations of said polymers have attracted attention.

As processes for producing such styrene polymers having a syndiotactic configuration a process for polymerizing styrene or styrene derivatives by the use of a catalyst comprising a titanium compound and a contact product of an organoaluminum compound and a condensation agent is disclosed in EP-A-0 224 097, and a process for polymerizing with the use of catalysts containing a titanium compound and an alkylaluminoxane as main components is disclosed in JP-A- 187708/1987. However, though the styrene polymer produced according to said processes has a high syndiotacticity, its molecular weight distribution is narrow such as weight average molecular weight (Mw)/number average molecular weight (Mn) = 1.5 to 3.0. As for styrene polymers having a narrow molecular weight distribution thus obtained, there has been no problem in injection molding, but there have been problems such as draw down or a large neck-in, in hollow molding, and sheet and film molding.

The present inventors have studied earnestly to produce styrene polymers which are suitable for hollow molding, sheet and film molding, and have a wide molecular weight distribution and a high syndiotacticity (object of the invention).

As a result, it has been found that the object can be attained by polymerization reaction with the use of catalysts containing not less than two specific kinds of titanium compounds and alkylaluminoxane. The present invention has been accomplished according to this finding.

### SUMMARY OF THE INVENTION

Therefore, subject-matter of the present invention is a process for producing styrene polymers having a high degree of syndiotactic configuration with a weight average molecular weight(Mw)/number average molecular weight (Mn) of styrene polymer being in the range of from 3 to 100,
which process comprises polymerizing styrene monomers in the presence of a catalyst comprising (a) a combination of

TiR¹ₐR²_{b}R³_{c}R⁴_{4-(a+b+c)} (I)

wherein R¹, R², R³ and R⁴ are each a hydrogen atom, an alkyl group having 1 to 20 carbon atoms, an alkoxyl group having 1 to 20 carbon atoms, an aryl group having 6 to 20 carbon atoms, an alkylaryl group and arylalkyl group, an acyloxy group having 1 to 20 carbon atoms, a cyclopentadienyl group, a substituted cyclopentadienyl group, an indenyl group or a halogen atom; a, b and c are each an integer of 0 to 4 and

TiRXYZ (III)

wherein, R represents a cyclopentadienyl group, a substituted cyclopentadienyl group or an indenyl group, X, Y and Z independently represent a hydrogen, an alkyl group having 1 to 12 carbon atoms, an alkoxyl group having 1 to 12 carbon atoms, an aryl group having 6 to 20 carbon atoms, an aryloxy group having 6 to 20 carbon atoms, an arylalkyl group having 6 to 20 carbon atoms or a halogen,
and (b) alkylaluminoxane.

The styrene polymers obtained according to the process of the present invention have a high degree of syndiotactic configuration and a weight molecular weight distribution (Mw/Mn) being in the range of from 3 to 100.

According to a preferred embodiment of the process of the present invention at least one of the not less than two kinds of titanium compounds is a titanium compound having an unsaturated π electron type ligand.

According to a further preferred embodiment of the process of the present invention the not less than two kinds of titanium compounds are combinations of pentamethylcyclopentadienyltitanium trimethoxide and cyclopentadienyltitanium trimethoxide; pentamethylcyclopentadienyltitanium trimethoxide and cyclopentadienyltitanium triisopropoxide; pentamethylcyclopentadienyltitanium triisopropoxide and cyclopentadienyltitanium trimethoxide; pentamethylcyclopentadienyltitanium triphenoxide and cyclopentadienyltitanium triphenoxide; pentamethylcyclopentadienyltitanium trimethoxide and 1,3-dimethylcyclopentadienyltitanium trimethoxide; pentamethylcyclopentadienyltitanium trimethoxide and 1,3,4-trimethylcyclopentadienyltitanium trimethoxide; pentamethylcyclopentadienyltitanium trichloride and cyclopentadienyltitanium trichloride; or pentamethylcyclopentadienyltrimethyltitanium and cyclopentadienyltrimethyltitanium.

Particularly preferred are combinations of cyclopentadienyltitanium trichloride and tetraethoxytitanium; pentamethylcyclopentadienyltitanium trichloride and tetraethoxytitanium; pentomethylcyclopentadienyltitanium trimethoxide and tetraethoxytitanium; cyclopentadienyltitanium trichloride and tetrabenzyltitanium; or cyclopentadienyltitanium triethoxide and tetraethoxytitanium.

### PREFERRED EMBODIMENTS OF THE INVENTION

The styrene monomers to be used as materials of the present invention are not critical and various ones can be used depending on the properties and applications required for polymers to be produced. Specifically, styrene; alkylstyrenes such as p-methylstyrene, m-methylstyrene, o-methylstyrene, 2,4-dimethylstyrene, 2,5-dimethylstyrene, 3,4-dimethylstyrene, 3,5-dimethylstyrene, p-ethylstyrene, m-ethylstyrene; p-tert-butylstyrene, and p-phenylstyrene; halogenated styrenes such as p-chlorostyrene, m-chlorostyrene, o-chlorostyrene, p-bromostyrene, m-bromostyrene, o-bromostyrene, p-fluorostyrene, m-fluorostyrene, o-fluorostyrene, and o-methyl-p-fluorostyrene; alkoxystyrenes such as p-methoxystyrene, m-methoxystyrene, o-methoxystyrene, p-ethoxystyrene, m-ethoxystyrene, and o-ethoxystyrene; carboxymethylstyrenes such as p-carboxymethylstyrene, m-carboxymethylstyrene, and o-carboxymethylstyrene; alkyletherstyrenes such as p-vinylbenzylpropylether; polycyclic vinyl compounds such as vinylnaphthalene, vinylanthracene, vinylbiphenyl can be mentioned.

They may be used singly or in the state of forming a copolymer using two or more kinds. In addition, in producing styrene copolymers, if necessary, with the above styrene monomers, olefin monomers such as ethylene, propylene, 1-butene, 1-hexene, 1-octene; diene monomers such as butadiene, isoprene; cyclic diene monomers; polar vinyl monomers such as methyl methacrylote, maleic anhydride and acrylonitrile can be used.

In the process of the present invention, (a) not less than two kinds of specific titanium compounds and (b) alkylaluminoxane are used as catalyst.

Therein as (a) not less than two kinds of titanium compounds (hereinafter referred to as component (a)), two or more kinds of various compounds containing titanium may be selected and used appropriately without Specified limitation.

For example, at least two compounds selected from the group consisting of titanium compounds represented by the general formula:

TiR¹ₐR²_{b}R³_{c}R⁴_{4-(a+b+c)} (I)

(wherein R¹, R², R³ and R⁴ are each a hydrogen atom, an alkyl group having 1 to 20 carbon atoms, an alkoxyl group having 1 to 20 carbon atoms, an aryl group having 6 to 20 carbon atoms, an alkylaryl group and arylalkyl group, an acyloxy group having 1 to 20 carbon atoms, a cyclopentadienyl group, a substituted cyclopentadienyl group, an indenyl group or a halogen atom; and a, b and c are each an integer of 0 to 4).

R¹, R², R³ and R⁴ in the general formula (I) which may be identical or different are each a hydrogen atom, alkyl group having 1 to 20 carbon atoms (specifically, a methyl group, an ethyl group, a propyl group, a butyl group, an amyl group, an isoamyl group, an isobutyl group, an octyl group, and 2-ethylhexyl group),
an alkoxyl group having 1 to 20 carbon atoms (specifically, a methoxyl group, an ethoxyl group, a propoxyl group, a butoxyl group, an amyloxy group, a hexyloxy group, a phenoxyl group, and 2-ethylhexyloxy group, an aryl group having to 20 carbon atoms, an alkylaryl group and an arylalkyl group, (specifically, a phenyl group, a tolyl group, a xylyl group, and a benzyl group), an acyloxy group having 1 to 20 carbon atoms (specifically, a heptadecylcarbonyloxy group) , a cyclopentadienyl group, a substituted cyclopentadienyl group (specifically, a methylcyclopentadienyl group, 1,2-dimethylcyclopentadienyl group, and pentamethylcyclopentadienyl group), an indenyl group or a halogen atom (chlorine, bromine, iodine and fluorine);
may be used in combination with at least one titanium compound represented by the general formula:

TiRXYZ (III)

wherein, R represents a cyclopentadienyl group, a substituted cyclopentadienyl group or an indenyl group, X, Y and Z independently represent a hydrogen, an alkyl group having 1 to 12 carbon atoms, an alkoxyl group having 1 to 12 carbon atoms, an aryl group having 6 to 20 carbon atoms, an aryloxy group having 6 to 20 carbon atoms, an arylalkyl group having 6 to 20 carbon atoms or a halogen. Of not less than two kinds of titanium compounds to be used, at least one kind selected from the above is preferably used. Further, not less than too kinds are preferably selected from these compounds.

The substituted cyclopentadienyl group represented by R in the above formula is, for example, a cyclopentadienyl group substituted by at least one of an alkyl group having 1 to 6 carbon atoms, more specifically, methylcyclopentadienyl group, 1,2-dimethylcyclopentadienyl group, 1,3-dimethylcyclopentadienyl group, 1,2,4-trimethylcyclopentadienyl group, and pentamethylcyclopentadienyl group.

In addition, X, Y and Z independently represent a hydrogen, an alkyl group having 1 to 12 carbon atoms (specifically, a methyl group, an ethyl group, a propyl group, n-butyl group, an isobutyl group, an amyl group, an isoamyl group, an octyl group, and 2-ethylhexyl group, an alkoxyl group having 1 to 12 carbon atoms (specifically, a methoxyl group, an ethoxyl group, a propoxyl group, a butoxyl group, an amyloxy group, hexyloxy group, an octyloxy group, and 2-ethylhexyloxy group), an aryl group having 6 to 20 carbon atoms (specifically, a phenyl group, and naphthyl group), an aryloxy group having 6 to 20 carbon atoms (specifically, a phenoxyl group), an arylalkyl group having 6 to 20 carbon atoms (specifically, a benzyl group) or a halogen (specifically, chlorine, bromine, iodine or fluorine).

Specific examples of titanium compounds represented by the general formula (III) include
cyclopentadienyltrimethyltitanium,
cyclopentadienyltriethyltitanium,
cyclopentadienyltripropyltitanium,
cyclopentadienyltributyltitanium,
methylcyclopentadienyltrimethyltitanium,
1,2-dimethylcyclopentadienyltrimethyltitanium,
1,2,4-trimethylcyclopentadienyltrimethyltitanium,
pentamethylcyclopentadienyltrimethyltitanium,
pentamethylcyclopentadienyltriethyltitanium,
pentamethylcyclopentadienyltripropyltitanium,
pentamethylcyclopentadienyltributyltitanium,
cyclopentadienylmethyltitanium dichloride,
cyclopentadienylethyltitanium dichloride,
pentamethylcyclopentadienylmethyltitanium dichloride,
pentamethylcyclopentadienylethyltitanium dichloride,
cyclopentadienyldimethyltitanium monochloride,
cyclopentadienyldiethyltitanium monochloride,
cyclopentadienyltitanium trimethoxide,
cyclopentadienyltitanium triethoxide,
cyclopentadienyltitanium tripropoxide,
cyclopentadienyltitanium triphenoxide,
1,3-dimethylcylclopentadienyltitanium trimethoxide,
1,3,4-trimethylcylclopentadienyltitanium trimethoxide,
pentamethylcyclopentadienyltitanium trimethoxide,
pentamethylcyclopentadienyltitanium triethoxide,
pentamethylcyclopentadienyltitanium tripropoxide,
pentamethylcyclopentadienyltitanium tributoxide,
pentamethylcyclopentadienyltitanium triphenoxide,
cyclopentadienyltitanium trichloride,
pentamethylcyclopentadienyltitanium trichloride,
cyclopentadienylmethoxytitanium dichloride,
cyclopentadienyldimethoxytitanium chloride,
pentamethylcyclopentadienylmethoxytitanium dichloride,
cyclopentadienyltribenzyltitanium,
pentamethylcyclopentadienylmethyldiethoxytitanium,
indenyltitanium trichloride, indenyltitanium trimethoxide,
indenyltitanium triethoxide, indenyltrimethyltitanium, and indenyltribenzyltitanium.

Of these titanium compounds, a compound containing no halogen atoms is preferred and a titanium compound having at least one unsaturated π electron type ligand is particularly preferred.

As component (a) of the catalyst of the present invention, not less than two kinds of titanium compounds as described above are used in combination.

In combining not less than two kinds, titanium compounds suitable for producing high-molecular polymers, and titanium compounds suitable for producing low-molecular polymers are preferably used in combination.

Various combination may be applied, for example, titanium compounds suitable for producing high-molecular polymers include a cyclopentadienyl group, in which R in the general formula (III) is substituted by 5 alkyl groups having 1 to 6 carbon atoms, specifically pentalkylcyclopentadienyl group such as pentamethylcyclopentadienyl. On the other hand, titanium compounds suitable for producing include cyclopentadienyl group in which R in the general formula (III) is unsubstituted cyclopentadienyl group or cyclopentadienyl group substituted by 1 to 4 alkyl groups having 1 to 6 carbon atoms. Specifically, combinations of pentamethylcyclopentadienyltitanium trimethoxide and cyclopentadienyltitanium trimethoxide;
pentamethylcyclopentadienyltitanium trimethoxide and cyclopentadienyltitanium triisopropoxide;
pentamethylcyclopentadienyltitanium triisopropoxide and cyclopentadienyltitanium trimethoxide;
pentamethylcyclopentadienyltitanium triphenoxide and cyclopentadienyltitanium triphenoxide;
pentamethylcyclopentadienyltitanium trimethoxide and 1,3-dimethylcyclopentadienyltitanium trimethoxide;
pentamethylcyclopentadienyltitanium trimethoxide and 1,3,4-trimethylcyclopentadienyltitanium trimethoxide;
pentamethylcyclopentadienyltitanium trichloride and cyclopentadienyltitanium trichloride; or
pentamethylcyclopentadienyltrimethyltitanium and cyclopentadienyltrimethyltitanium can be mentioned.

Further, the compound represented by the general formula (I), and the compound represented by the general formula (III) excepting the compound represented by the general formula (I) can be used together. For example, combinations of cyclopentadienyltitanium trichloride and tetraethoxytitanium; pentamethylcyclopentadienyltitanium trichloride and tetraethoxytitanium; pentamethylcyclopentadienyltitanium trimethoxide and tetraethoxytitanium; cyclopentadienyltitanium trichloride and tetrabenzyltitanium; or cyclopentadienyltitanium triethoxide and tetraethoxytitanium can be mentioned.

By varying these combinations, molecular weight or molecular weight distribution of the resulting styrene polymers can be controlled in the desired range.

As described above, in the present invention, combinations of the titanium compounds are various and not critical. However, those which react each other to be a kind of titanium compound when mixed with other titanium compounds are not preferable generally, though they can be used as catalysts for polymerization by controlling the condition so that such reaction is not completed.

In addition, the proportion of not less than two kinds of titanium compounds is not critical and may be determined depending on the desired molecular weight and molecular weight distribution.

As catalyst of the present invention, (b) alkylaluminoxane (hereinafter referred to as component (b)) is used with component (a). There, alkylaluminoxane is a condensation product (contact product) of condensing agent (for example, water) and various alkylaluminum compounds.

As alkylaluminum compounds used to obtain alkylaluminoxane, the compound represented by the general formula:

AlR⁵₃ (IV)

(wherein, R⁵ is an alkyl group having 1 to 8 carbon atoms), specifically, trimethylaluminum, triethylaluminum, and triisobutylaluminum can be mentioned, and trimethylaluminum is most preferable.

A typical example of the condensing agent to be reacted with the above alkylaluminum compound is water. In addition, and compounds can be used as long as they undergo a condensation reaction with alkylaluminum compounds.

As alkylaluminoxane as component (b), chain alkylaluminoxane represented by the following general formula: 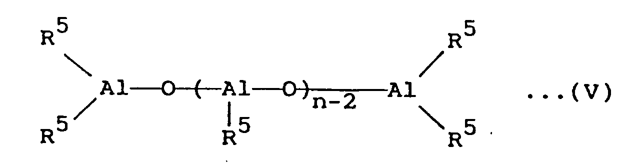
(wherein n represents an integer of 2 to 50 and R⁵ is defined as above) or cyclic alkylaluminoxane (degree of polymerization 2 to 52) having a recurring unit represented by the following general formula: 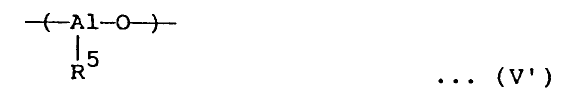
can be used.

In general, the contact product of the alkylaluminum compound (e.g., trialkylaluminum) and water contains aforementioned chain alkylaluminoxane and cyclic alkylaluminoxane, unreacted alkylaluminum compound (e.g., trialkylaluminum), various mixtures of condensates and further a molecule resulting from association in a complicated manner of the above mixture, the type of which varies depending on contacting conditions of alkylaluminum compound and water.

Suitable examples of the above alkylaluminoxane are those in which the area of the high magnetic field component in the methyl proton signal region due to the aluminum-methyl group (Al-CH₃) bond as observed by the proton nuclear magnetic resonance method is not more than 50%. That is, in a proton nuclear magnetic resonance (¹H-NMR) spectral analysis of the above contact product in toluene solvent at room temperature, the methyl proton signal due to Al-CH₃ is observed in the region of 1.0 to -0.5 ppm (tetramethylsilane (TMS) standard). Since the proton signal of TMS (0 ppm) is in the region of the methyl proton signal due to Al-CH₃, the methyl proton signal due to Al-CH₃ is measured with 2.35 ppm methyl proton signal of TMS standard. The methyl proton signal is divided into two components: the high magnetic field component in the -0.1 to -0.5 ppm region and the other magnetic field component in the 1.0 to -0.1 ppm region. In alkylaluminoxane preferably used as component (b), the area of the high magnetic field component is not more than 50%, preferably 45 to 5% of the total signal area.

The reaction of the alkylaluminum compound and water is not critical and can be carried out according to the well known methods. For example, (1) a method in which alkylaluminum compound is dissolved in an organic solvent and then contacted with water, (2) a method in which alkylaluminum compound is first added at the time of polymerization and then water is added, and (3) a method in which alkylaluminum compound is reacted with the water of crystallization contained metal salts and the like, or water absorbed in inorganic or organic materials are mentioned.

In the present invention, the catalyst composed of component (a) and (b) may be used, and if desired, in addition to the above catalyst, other catalytic components can be added. As other catalytic components, organic aluminum compound can be mentioned and specifically those represented by the general formula:

AlR⁶₃ (VI)

wherein, R⁶ is a hydrogen atom or an alkyl group having 1 to 10 carbon atoms. In the formula, an alkyl group having 1 to 10 carbon atoms represented by R⁶ includes a methyl group, an ethyl group, a propyl group, an isopropyl group, a butyl group, an isobutyl group, t-butyl group, a pentyl group, a hexyl group, a pentyl group, and an octyl group. R⁶ may be identical or different.

As such organic aluminum compounds, specifically triisobutylaluminum, and diisobutylaluminum monohydride are suitable.

In the present invention, the ratio of amount of component (a) and (b) varies depending on the kind thereof, the kind of styrene monomer, reaction condition, molecular weight or molecular weight distribution of the desired styrene polymer, and can not be decided definitely, but usually a ratio of titanium contained in component (a) and aluminum contained in component (b), i.e. aluminum/titanium (molar ratio), is 1 to 10⁶, preferably 10 to 10⁵. However, when other organic aluminum compound is used as described above, it is preferably added that the total amount of aluminum contained in it and aluminum of component (b) should be in the above range.

The molar ratio of one titanium compound contained in component (a) and the other titanium compound contained in component (a) is 1 : 99, preferably 10 : 90.

In the present invention, the mixing method of catalysts is not critical, for example, the method in which not less than two kinds of titanium compounds of component (a) are previously mixed and then contacted with component (b), and if desired, with organic aluminum compound, and the method in which component (b), and if desired, organic aluminum compound is contacted with each of not less than two kinds of titanium compounds of component (a) and then mixed, can be applied. The mixing of the catalytic components is usually carried out at the temperature of 0 to 100°C.

In the present invention, polymerization or copolymerization of the beforementioned styrene monomer may be carried out in the presence of the above catalyst. As polymerization method, conventional method, for example, bulk polymerization, solution polymerization using solvents such as an aliphatic hydrocarbon such as pentane, hexane and heptane; an alicyclic hydrocarbon such as cyclohexane, or an aromatic hydrocarbon such as benzene, toluene and xylene, or slurry polymerization can be applied. Any methods may be applied, but bulk polymerization is especially excellent in productivity. In addition, batch polymerization and continuous polymerization may be applied.

In the above polymerization, reaction temperature is not particularly limited, but is usually 0 to 100°C, preferably 20 to 80°C. In batch polymerization, reaction time is 10 minutes to 20 hours, preferably 0.5 to 5 hours.

The amount of catalyst used to the styrene monomer as material is not particularly limited, but preferably 0.001 to 1 mole per one liter of the styrene monomer. A ratio of alkylaluminoxane and the transition metal compound, in terms of the ratio of aluminum and titanium, i.e. aluminum/titanium (molar ratio), is 1 to 10⁶, and preferably 10 to 10⁴.

After polymerization, if necessary, the resulting polymer is subjected to post-treatment, a styrene polymer having a high purity can be obtained in high yield.

Styrene polymers thus obtained are those having syndiotactic configuration, especially high syndiotacticity. The styrene-based polymer having a syndiotactic configuration means that the polymer has a stereostructure with a configuration that is syndiotactic, i.e., the stereostructure in which phenyl groups or substituted phenyl groups as side chains are located alternately at opposite directions relative to the main chain consisting of carbon-carbon bonds. The tacticity is quantitatively determined by the nuclear magnetic resonance method using carbon isotope (¹³C-NMR method). The tacticity as determined by the ¹³C-NMR method can be indicated in terms of proportions of structural units continuously connected to each other, i.e., a diad in which two structural units are connected to each other, a triad in which three structural units are connected to each other, or pentad in which five structural units are connected to each other. Styrene-based polymers having syndiotactic configuration of the present invention include such a syndiotacticity that the proportion of racemic diad is at least 75% and preferably at least 85%, or the proportion of racemic pentad is at least 30% and preferably at least 50%.

Further, styrene polymers obtained in the present invention have a wide molecular weight distribution, that is, weight average molecular weight (Mw)/number average molecular weight (Mn) such as in the range of 3 to 100, preferably 4 to 50, and are styrene polymers having a syndiotactic configuration with a wide molecular weight distribution as compared with conventional styrene polymers.

The number average molecular weight of styrene polymer produced by the process of the present invention is not critical and usually 1,000 to 5,000,000 preferably 5,000 to 4,000,000.

As described above, according to the process of the present invention, styrene polymers having syndiotactic configuration of especially high tacticity with a wide molecular weight distribution can be produced by a simple process. Such styrene polymers are excellent in physical properties such as heat resistance because of high syndiotacticity, have a wide molecular weight distribution and can be used suitably for hollow molding, sheet and film molding.

Accordingly, styrene polymers obtained in the process of the present invention are effectively used as materials of various moldings including hollow molding, sheet molding, and film molding as well as injection molding.

The present invention will be described in greater detail by referring to the following Examples and Comparative Examples.

### Example 1

Into a 500 ml glass container with a stirrer, 200 ml of styrene was placed, heated to 70°C, and then 4 mmol of methyleluminoxane was added as aluminum atom, and then a mixed solution of 0.005 mmol of cyclopentadienyltitanium trimethoxide and 0.05 mmol of pentamethylcyclopentadienyltitanium trimethoxide was added, and polymerization was carried out at 70°C for 30 minutes. Then, the reaction was stopped with methanol, and the mixture was deashed with hydrochloric acid-methanol and was washed with methanol, dried to obtain 6.15 g of polymer. The weight average molecular weight (Mw) of the polymer was 870,000, Mw/Mn was 24.60.

### Examples 2 to 5 and Comparative Example 1

The same procedure was repeated as in Example 1 except that catalytic component and reaction condition in Example 1 were changed to as shown in Table 1.

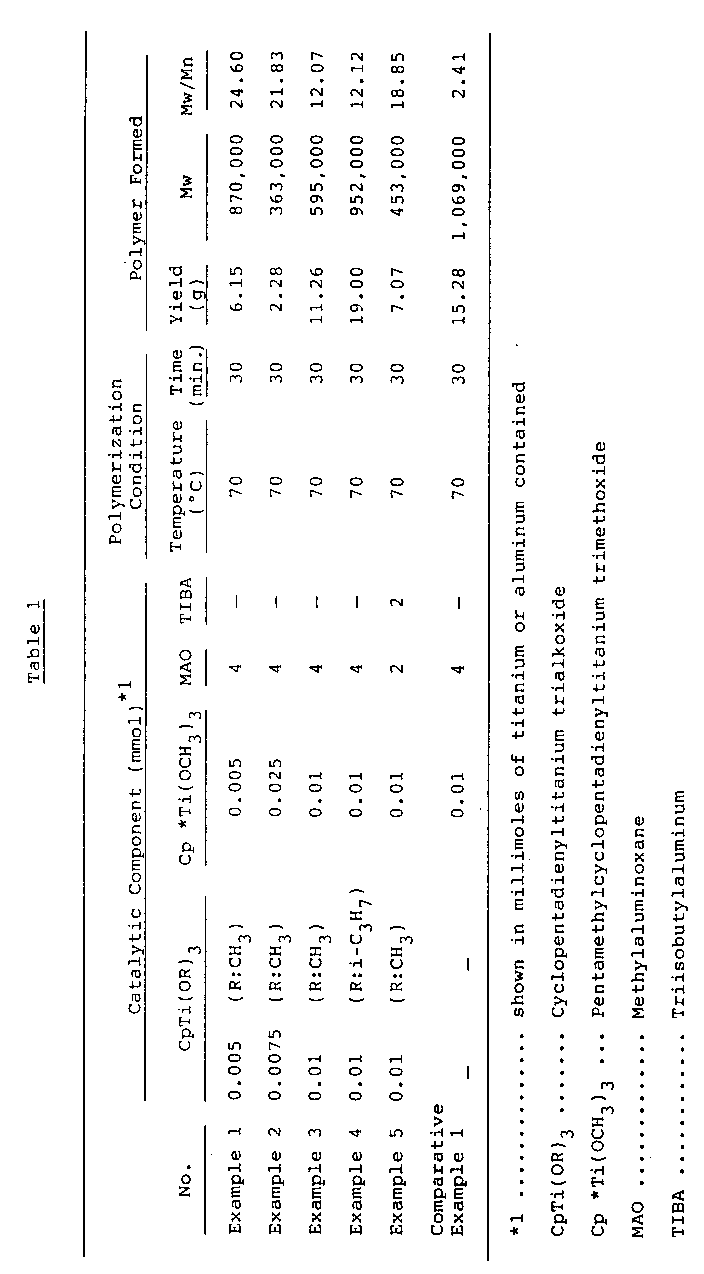

### Example 6

Into a 500 ml glass container with a stirrer, 200 ml of styrene was placed, and heated to 70°C, then a mixed solution of 2 mmol of methylaluminoxane as aluminum atom and 0.01 mmol of cyclopentadienyltitanium trimethoxide and a mixed solution of 2 mmol of methylaluminoxane as aluminum atom and 0.01 mmol of pentamethylcyclopentadienyltitanium trimethoxide were added, and polymerization was carried out at 70°C for 2 hours. Then, the reaction was stopped with methanol, the mixture was deashed with hydrochloric acid-methanol and was washed with methanol, dried to obtain 11.06 g of polymer. The weight average molecular weight (Mw) was 957,000, Mw/Mn was 5.62.

### Example 7

Into a 500 ml glass container with a stirrer, 100 ml of toluene was placed, and heated to 50°C, then 7.5 mmol of methylaluminoxane was added as aluminum atom, and then 0.0125 mm of a mixed solution (1:1) of cyclopentadienyltitanium trichloride and tetraethoxytitanium was added, and polymerization was carried out at 50°C for 1 hour. Then, the reaction was stopped with methanol, and the mixture was deashed with hydrochloric acid-methanol, washed with methanol, and dried to obtain 0.42 g of polymer. The weight average molecular weight (Mw) was 96,500, Mw/Mn was 5.14.

## Claims

1. A process for producing styrene polymers having a high degree of syndiotactic configuration with a weight average molecular weight/number average molecular weight of styrene polymer is in the range of 3 to 100,
which process comprises polymerizing styrene monomers in the presence of a catalyst comprising (a) a combination of
TiR¹ₐR²_{b}R³_{c}R⁴_{4-(a+b+c)} (I)
wherein R¹, R², R³ and R⁴ are each a hydrogen atom, an alkyl group having 1 to 20 carbon atoms, an alkoxyl group having 1 to 20 carbon atoms, an aryl group having 6 to 20 carbon atoms, an alkylaryl group and arylalkyl group, an acyloxy group having 1 to 20 carbon atoms, a cyclopentadienyl group, a substituted cyclopentadienyl group, an indenyl group or a halogen atom; a, b and c are each an integer of 0 to 4 and
TiRXYZ (III)
wherein, R represents a cyclopentadienyl group, a substituted cyclopentadienyl group or an indenyl group, X, Y and Z independently represent a hydrogen, an alkyl group having 1 to 12 carbon atoms, an alkoxyl group having 1 to 12 carbon atoms, an aryl group having 6 to 20 carbon atoms, an aryloxy group having 6 to 20 carbon atoms, an arylalkyl group having 6 to 20 carbon atoms or a halogen,
and (b) alkylaluminoxane.

2. The process according to Claim 1, wherein, of not less than two kinds of titanium compounds, at least one titanium compound is that having one unsaturated π electron type ligand.

3. The process according to Claim 1, wherein (a) not less than two kinds of titanium compounds are combinations of pentamethylcyclopentadienyltitanium trimethoxide and cyclopentadienyltitanium trimethoxide; pentamethylcyclopentadienyltitanium trimethoxide and cyclopentadienyltitanium triisopropoxide; pentamethylcyclopentadienyltitanium triisopropoxide and cyclopentadienyltitanium trimethoxide; pentamethylcyclopentadienyltitanium triphenoxide and cyclopentadienyltitanium triphenoxide; pentamethylcyclopentadienyltitanium trimethoxide and 1,3-dimethylcyclopentadienyltitanium trimethoxide; pentamethylcyclopentadienyltitanium trimethoxide and 1,3,4-trimethylcyclopentadienyltitanium trimethoxide; pentamethylcyclopentadienyltitanium trichloride and cyclopentadienyltitanium trichloride; or pentamethylcyclopentadienyltrimethyltitanium and cyclopentadienyltrimethyltitanium.

4. The process according to Claim 1, wherein (a) not less than two kinds of titanium compounds are combinations of cycropentadienyltitanium trichloride and tetraethoxytitanium; pentamethylcyclopentadienyltitanium trichloride and tetraethoxytitanium; pentamethylcyclopentadienyltitanium trimethoxide and tetraethoxytitanium;
cyclopentadienyltitanium trichloride and tetrabenzyltitanium; or cyclopentadienyltitanium triethoxide and tetraethoxytitanium.

## Patentansprüche

1. Ein Verfahren zur Herstellung von Styrolpolymeren mit einem hohen Grad syndiotaktischer Konfiguration mit einem gewichtsmittleren Molekulargewicht/zahlenmittleren Molekulargewicht des Styrolpolymeren im Bereich von 3 bis 100; wobei das Verfahren umfaßt Polymerisieren von Styrolmonomeren in Gegenwart eines Katalysators, umfassend
(a) eine Kombination von
TiR¹ₐR²_{b}R³_{c}R⁴_{4-(a+b+c)} (I)
wobei R¹, R², R³ und R⁴ jeweils ein Wasserstoffatom, eine Alkylgruppe mit 1 bis 20 Kohlenstoffatomen, eine Alkoxygruppe mit 1 bis 20 Kohlenstoffatomen, eine Arylgruppe mit 6 bis 20 Kohlenstoffatomen, eine Alkylarylgruppe und Arylalkylgruppe, eine Acyloxygruppe mit 1 bis 20 Kohlenstoffatomen, eine Cyclopentadienylgruppe, eine substituierte Cyclopentadienylgruppe, eine Indenylgruppe oder ein Halogenatom ist; a, b und c jeweils eine ganze Zahl von 0 bis 4 ist, und
TiRXYZ (III)
wobei R ein Cyclopentadienylgruppe, eine substituierte Cyclopentadienylgruppe oder eine Indenylgruppe darstellt, X, Y und Z unabhängig ein Wasserstoff, eine Alkylgruppe mit 1 bis 12 Kohlenstoffatomen, eine Alkoxygruppe mit 1 bis 12 Kohlenstoffatomen, eine Arylgruppe mit 6 bis 20 Kohlenstoffatomen, eine Aryloxygruppe mit 6 bis 20 Kohlenstoffatomen, eine Arylalkylgruppe mit 6 bis 20 Kohlenstoffatomen oder Halogen darstellt, und
(b) Alkylaluminoxan.

2. Das Verfahren entsprechend Anspruch 1, wobei von den nicht weniger als zwei Arten von Titanverbindungen mindestens eine Titanverbindung eine mit einem ungesättigten π-Elektronen-Typ-Liganden ist.

3. Das Verfahren entsprechend Anspruch 1, wobei (a) nicht weniger als zwei Arten von Titanverbindungen Kombinationen von Pentamethylcyclopentadienyltitantrimethoxid und Cyclopentadienyltitantrimethoxid; Pentamethylcyclopentadienyltitantrimethoxid und Cyclopentadienyltitantriisopropoxid; Pentamethylcyclopentadienyltitantriisopropoxid und Cyclopentadienyltitantrimethoxid; Pentamethylcyclopentadienyltitantriphenoxid und Cyclopentadienyltitantriphenoxid; Pentamethylcyclopentadienyltitantrimethoxid und 1,3-Dimethylcyclopentadienyltitantrimethoxid; Pentamethylcyclopentadienyltitantrimethoxid und 1,3,4-Trimethylcyclopentadienyltitantrimethoxid; Pentamethylcyclopentadienyltitantrichlorid und Cyclopentadienyltitantrichlorid; oder Pentamethylcyclopentadienyltrimethyltitan und Cyclopentadientyltrimethyltitan sind.

4. Das Verfahren entsprechend Anspruch 1, wobei (a) nicht weniger als zwei Arten von Titanverbindungen Kombinationen von Cyclopentadienyltitantrichlorid und Tetraethoxytitan; Pentamethylcyclopentadienyltitantrichlorid und Tetraethoxytitan; Pentamethylcyclopentadienyltitantrimethoxid und Tetraethoxytitan; Cyclopentadienyltitantrichlorid und Tetrabenzyltitan; oder Cyclopentadienyltitantriethoxid und Tetraethoxytitan sind.

## Revendications

1. Un procédé pour la préparation de polymères de styrène présentant un degré élevé de configuration syndiotactique avec un rapport entre le poids moléculaire moyen en poids (Mw) et le poids moléculaire moyen en nombre (Mn) du polymère de styrène se situant dans la gamme de 3 à 100, ce procédé comportant la polymérisation de monomères de styrène en présence d'un catalyseur comportant (a) une combinaison de TiR¹aR²bR³CR⁴_{4-(a+b+c)} (I) dans laquelle R¹, R², R³ et R⁴ sont chacun un atome d'hydrogène, un groupe alkyle ayant de 1 à 20 atomes de carbone, un groupe alcoxyle ayant de 1 à 20 atomes de carbone, un groupe aryle ayant de 6 à 20 atomes de carbone, un groupe alkylaryle et un groupe arylalkyle, un groupe acyloxy ayant de 1 à 20 atomes de carbone, un groupe cyclopentadiényle, un groupe cyclopentadiényle substitué, un groupe indényle ou un atome d'halogène ; a, b et c sont chacun un nombre entier de 0 à 4 et TiRXYZ (III) où R représente un groupe cyclopentadiényle, un groupe cyclopentadiényle substitué, ou un groupe indényle, X, Y et Z représentent, d'une façon indépendante, un hydrogène, un groupe alkyle ayant de 1 à 12 atomes de carbone, un groupe alcoxy ayant de 1 à 12 atomes de carbone, un groupe aryle ayant de 6 à 20 atomes de carbone, un groupe aryloxy ayant de 6 à 20 atomes de carbone, un groupe arylalkyle ayant de 6 à 20 atomes de carbone ou un atome d'halogène, et (b) un alkylaluminoxane.

2. Le procédé selon la revendication 1, dans lequel, parmi pas moins de deux sortes de composés du titane, au moins un composé du titane est celui présentant un ligand insaturé du type à électron π.

3. Le procédé selon la revendication 1, dans lequel (a) pas moins de deux sortes de composés du titane sont une combinaison de triméthylate de pentaméthylcyclopentadiényltitane et de cyclopentadiényltitane ; de triméthylate de pentaméthylcyclopentadiényltitane et de triisopropylate de cyclopentadiényltitane ; de triisopropylate de pentaméthylcyclopentadiényltitane et de triisopropylate de cyclopentadiényltitane; de triphénolate de pentaméthylcyclopentadiényltitane et de triphénolate de cyclopentadiényltitane ; de triméthylate de pentaméthylcyclopentadiényltitane et de triméthylate de 1,3-diméthylcyclopentadiényltitane ; de triméthylate de pentaméthylcyclopentadiényltitane et de triméthylate de 1,3,4-triméthylcyclopentadiényltitane ; de trichlorure de pentaméthylcyclopentadiényltitane et de trichlorure de cyclopentadiényltitane ; ou de pentaméthylcyclopentadiényltriméthyltitane et de cyclopentadiényltriméthyltitane.

4. Le procédé selon la revendication 1, dans lequel (a) pas moins de deux sortes de composés du titane sont des combinaisons de trichlorure de cyclopentadiényltitane et de tétraéthyoxytitane; de trichlorure de pentaméthylcyclopentadiényltitane et de tétraéthoxytitane ; de triméthylate de pentaméthylcyclopentadiényltitane et de tétraéthoxytitane ; de trichlorure de cyclopentadiényltitane et de tétrabenzyltitane ou bien de triéthylate de cyclopentadiényltitane et de tétraéthoxytitane.
